# EUROPÄISCHE PATENTSCHRIFT

(11) **EP 4 381 354 B1**
(45) Veröffentlichungstag und Bekanntmachung des Hinweises auf die Patenterteilung: **02.09.2026**
(21) Anmeldenummer: 22747285.9
(22) Anmeldetag: 01.07.2022
(51) Int. Cl.: G05B 19/042, G05B 23/02

(54) **VERFAHREN UND ANORDNUNG ZUR ANALYSE EINES FELDGERÄTS**
METHOD AND ASSEMBLY FOR ANALYZING A FIELD DEVICE
PROCÉDÉ ET ENSEMBLE D'ANALYSE D'UN APPAREIL DE TERRAIN

(30) Priorität: 06.08.2021 DE 102021120477
(43) Veröffentlichungstag der Anmeldung: 12.06.2024
(73) Patentinhaber: PHOENIX CONTACT GmbH & Co. KG, 32825 Blomberg (DE)
(72) Erfinder: HAMMERBACHER, Tom, 31812 Bad Pyrmont (DE); PLATZ, Gorden, 31812 Bad Pyrmont (DE)
(74) Vertreter: LifeTech IP Spies & Behrndt Patentanwälte PartG mbB
(86) Internationale Anmeldenummer: PCT/EP2022/068317
(87) Internationale Veröffentlichungsnummer: WO 2023/011818

(56) Entgegenhaltungen:
- DE-A1- 102018 130 649
- DE-A1- 102018 133 316
- DE-A1- 102019 219 250

## Beschreibung

Die vorliegende Erfindung liegt auf dem Gebiet der computerimplementierten Erfindungen und betrifft ein Verfahren und eine Anordnung zur Analyse eines Feldgeräts mit einem maschinellen Lernsystem.

Im industriellen Umfeld und vorzugsweise in der Fertigungs- und Prozessindustrie kommt zunehmend künstliche Intelligenz zum Einsatz. Künstliche Intelligenz (abgekürzt "KI") betrifft eine Technologie, welchen es Computern, das heißt elektronischen Recheneinheiten mit Hilfe entsprechender Algorithmen und Infrastruktur ermöglicht, Intelligenz bis zu einem gewissen Grad nachzuahmen. Dies geschieht beispielsweise durch ein maschinelles Lernsystem, das heißt durch maschinelles Lernen.

Maschinelles Lernen (abgekürzt "ML") ist ein Teilgebiet der künstlichen Intelligenz, bei welchem entsprechende Algorithmen im Zuge ihrer Ausführung mit Hilfe von elektronischen Recheneinheiten aus vielen Informationen (Daten) lernen, um sodann in entsprechendem Umfang anpassungsfähig und autonom agieren zu können. Mit anderen Worten geht es bei maschinellem Lernen um die Generierung von Wissen in Form von statistischen Modellen aus Informationen.

Das so genannte Industrielle Internet der Dinge ("Industrial Internet of Things/IIoT") stellt beispielsweise in der Fertigungs- und Prozessindustrie aufgrund zunehmender Komplexität besondere Anforderungen an das Management und die Administration von Feldgeräten. Die Aufgabe der Analyse, das heißt die Erkennung sowie insbesondere die Vorhersage eines zukünftigen Betriebszustands derartiger Geräte gewinnt im Bereich des Plant-Asset-Managements (abgekürzt "PAM") solcher Anlagen zunehmend an Bedeutung.

Mittlerweile kommen zur Analyse von Feldgeräten im industriellen Umfeld beispielsweise aufgrund immer leistungsfähigerer und kostengünstigerer elektronischer Recheneinheiten (Computer) maschinelle Lernverfahren zum Einsatz, um beispielsweise eine berechnete Vorhersage zur (zukünftigen) Funktionalität und somit zum zukünftigen Betriebszustand des Feldgeräts mit hinreichender Wahrscheinlichkeit treffen zu können. Insbesondere geht es um die Ermittlung möglicher, zu erwartende Fehler oder Ausfälle von Feldgeräten.

Das Aufsetzen, Administrieren und/oder Erweitern derartiger Analyseverfahren erfordert beispielsweise fundierte Kenntnisse über die jeweils zum Einsatz kommende Programmiersprache (beispielsweise "Python") bzw. Programmbibliothek (beispielsweise "PyTorch") sowie den Aufbau der Algorithmen oder zumindest von Bestandteilen von Algorithmen, welche dem maschinellen Lernsystem zugrunde liegen und zur Ausführung vorgesehen sind, um Informationen zu verarbeiten. Dies hat beispielsweise den Nachteil, dass häufig nur die jeweiligen Anwendungsentwickler mit entsprechenden Kenntnissen der Algorithmen und der zugrundliegenden Programmiersprache Zugang zu dem maschinellen Lernsystem haben, was zu einem begrenzten Einsatzgebiet führt.

Die Druckschrift DE 10 2018 133 316 A1 lehrt ein Verfahren zum Betreiben eines Feldgerätes der Automatisierungstechnik und Feldgerät der Automatisierungstechnik.

Es ist daher eine Aufgabe der vorliegenden Erfindung, ein verbessertes Verfahren zur Analyse eines Feldgeräts mit einem maschinellen Lernsystem bereitzustellen, welches vor allem durch eine einfachere Konfiguration, das heißt Administration hinsichtlich Anpassung, Wartung und Erweiterung des maschinellen Lernsystems gekennzeichnet ist. Ferner ist es eine Aufgabe der vorliegenden Erfindung, eine Anordnung mit einem Feldgerät, einer elektronischen Recheneinheit und vorzugsweise einer Benutzereingabeeinheit bereitzustellen, wobei die elektronische Recheneinheit zur Durchführung des verbesserten Verfahrens zur Analyse eines Feldgeräts konfiguriert ist.

Die Aufgabe wird durch die Merkmale der Ansprüche 1 und 9 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt ein Verfahren zur Analyse eines Feldgeräts gemäß Patentanspruch 1.

### GEAENDERTES BLATT

Die vorliegende Erfindung stellt beispielsweise ein einfach zu konfigurierendes und daher optimiert zu administrierendes Verfahren zur Analyse eines Feldgeräts mit einem maschinellen Lernsystem bereit.

Das Feldgerät kann beispielsweise als Aktor oder als Sensor ausgebildet sein, oder einen Aktor oder einen Sensor umfassen. Das Feldgerät kann alternativ als Anordnung mehrerer Aktoren oder als Anordnung mehrerer Sensoren ausgebildet sein, oder eine Anordnung mehrerer Aktoren oder eine Anordnung mehrerer Sensoren umfassen. Beispielsweise kann das Feldgerät ein elektrisch/elektronisch ansteuerbares, mechanisches Ventil zur Steuerung eines Mediums in einem Kreislauf innerhalb eines Produktionsprozesses sein, oder beispielsweise ein elektrisch/elektronisch ansteuerbarer optischer Sensor zur Erkennung eines Objekts.

Das Verfahren gemäß der vorliegenden Erfindung kann vorzugsweise zumindest teilweise als computerimplementiertes Verfahren ausgebildet sein und in einer Laufzeitumgebung einer elektronischen Recheneinheit ausgeführt werden. Die elektronische Recheneinheit kann beispielsweise nach der Von-Neumann-Architektur konfiguriert sein und zumindest ein Rechenwerk (Zentraleinheit, Prozessor), ein Steuerwerk, ein Bussystem, ein Eingabe-/Ausgabewerk und weitere Komponenten und Elemente umfassen. Das Rechenwerk kann zur Ausführung zumindest eines Algorithmus konfiguriert sein und/der vorzugsweise mehrere Rechenkerne umfassen. Mit anderen Worten kann die elektronische Recheneinheit als Digitalrechner und somit als Computer ausgebildet sein. Es ist möglich, dass bestimmte Abschnitte des Verfahrens zumindest teilweise parallel und/oder gleichzeitig ablaufen oder ausgeführt werden können.

Das Verfahren gemäß der vorliegenden Erfindung ist beispielsweise vor allem dadurch gekennzeichnet, dass somit Kriterien oder Einstellungen zur Ausführung des Verfahrens zur Analyse des Feldgeräts auf einfache Weise durch Generieren einer Beschreibungsinformation und einer Verarbeitungsinformation festgelegt, das heißt definiert oder bestimmt werden können, welche die weitere Ausführung des Verfahrens beeinflussen und den zumindest einen ersten Algorithmus und/oder den zumindest einen zweiten Algorithmus zumindest teilweise steuern.

Die Beschreibungsinformation kann zumindest eine Funktion auf Basis einer Vorlageninformation umfassen. Die Vorlageninformation kann beispielsweise eine vordefinierte Anzahl konfigurierbarer Analysefunktionen zur Analyse des Feldgeräts in einem jeweiligen Umfang beinhalten. Beispielsweise kann die Vorlageninformation auch Angaben darüber enthalten oder Funktionen bereitstellen, welche Parameter und/oder Eigenschaften des Feldgeräts und in welcher Weise diese analysiert werden sollen und/oder vorzugsweise in welchem Umfang. Somit kann in der Vorlageninformation eine Funktion oder eine Funktionsangabe abgelegt sein, welche beispielsweise das Verfahren zur Analyse des Feldgeräts zur Ermittlung eines zukünftigen Verschleißzustands betrifft.

Die Beschreibungsinformation kann somit beispielsweise eine Angabe enthalten, welche Art der Analyse des Feldgeräts durch das Verfahren durchgeführt werden soll, und somit ein zu erwartendes Ergebnis festlegen. Beispielsweise kann das Feldgerät in einer entsprechenden Gesamtheit analysiert werden, was durch eine entsprechende Beschreibungsinformation festgelegt wird. Alternativ können in einer Beschreibungsinformation Angaben enthalten sein, nur bestimmte oder einzelne Komponenten und/oder Elemente des Feldgeräts zu analysieren, wie beispielsweise einzelne Aktoren oder Sensoren. Die Möglichkeiten zur Analyse sind daher je nach Feldgerät unterschiedlich.

Die Beschreibungsinformation kann beispielsweise eine Angabe zur Analyse des Feldgeräts, das heißt eine Funktion "TASK: Ermittlung zukünftiger Funktionszustand" oder "TASK: Ermittlung zukünftiger Verschleißzustand" enthalten. Mit dem Generieren der Beschreibungsinformation kann ferner vor Durchführung weiterer Abschnitte oder Abläufe des Verfahrens durch entsprechende weitere Angaben festgelegt werden, welcher Algorithmus des maschinellen Lernsystems im Rahmen der Analyse des Feldgeräts ausgewählt und/oder aufgerufen und/oder ausgeführt werden soll. Hierzu muss in der Beschreibungsinformation allerdings keinerlei Programmsyntax, das heißt Quellcode hinterlegt werden. Damit lässt sich das Verfahren zur Analyse des Feldgeräts, wie oben bereits beschrieben, auf relativ einfache Art und Weise administrieren.

Analog zur Beschreibungsinformation kann auch die Verarbeitungsinformation konfiguriert sein. Die Verarbeitungsinformation kann vorzugsweise weitere Angaben enthalten und vor allem zumindest eine erste Informationsquelle mit Informationen zu dem Feldgerät festlegen. Vorzugsweise können in der zumindest einen ersten Informationsquelle Informationen in Form von Prozessdaten des Feldgeräts abgelegt sein, welche durch Messung und/oder durch Simulation, das heißt durch eine Berechnung, ermittelt wurden und vorzugsweise das Feldgerät in einem normalen oder unkritischen Betriebszustand kennzeichnen. Bei den Informationen der zumindest einen ersten Informationsquelle kann es sich beispielsweise um Temperaturwerte, Druckwerte, Beschleunigungswerte, Schaltzeiten, etc. handeln, die am und/oder im Feldgerät auftreten.

Die Verarbeitungsinformation kann weitere Angaben enthalten, welche beispielsweise die Angaben, das heißt zumindest eine Funktion der Beschreibungsinformation weiter konkretisieren und/oder ergänzen. Angaben in der Verarbeitungsinformation können beispielsweise "JOB: Analyseintervall 30sec" und/oder "JOB: Abfrageparameter = Temperatur, Druck, Schaltzeit" betreffen.

Der zumindest eine erste Parameter zu dem Feldgerät ist eine messbare Eigenschaft und/oder zumindest eine berechenbare Eigenschaft des Feldgeräts oder physikalische Größe betreffend das Feldgerät in einem bestimmten Betriebszustand wie beispielsweise eine Betriebstemperatur, ein Betriebsdruck, eine Betriebsschaltzeit, ein Beschleunigungsverhalten, etc.

Die Beschreibungsinformation und/oder die Vorlageninformation und/oder die Verarbeitungsinformation kann zumindest teilweise mittels oder anhand einer Abfrage an einer Benutzereingabeeinheit, vorzugsweise mit einer graphischen Benutzeroberfläche, generiert werden.

Die Beschreibungsinformation und/oder die Vorlageninformation und/oder die Verarbeitungsinformation kann beispielsweise eine zumindest teilweise syntaxfreie Textinformation, vorzugsweise im UTF-8-Format, sein. Die Beschreibungsinformation und/oder die Vorlageninformation und/oder die Verarbeitungsinformation können jeweils als separate Datei abgespeichert vorliegen oder im Zuge des Generierens in einer gemeinsamen Datei abgespeichert werden. Vorzugsweise kann die Beschreibungsinformation und/oder die Vorlageninformation zumindest teilweise im JSON-Format (JavaScript Object Notation) dargestellt und/oder generiert und/oder abgespeichert sein.

Das maschinelle Lernsystem kann vorzugsweise computerimplementiert ausgebildet sein und zumindest einen ersten Algorithmus und/oder zumindest einen zweiten Algorithmus umfassen. Der zumindest eine erste Algorithmus und/oder der zumindest eine zweite Algorithmus können konfiguriert sein, Informationen in einer Laufzeitumgebung einer elektronischen Recheneinheit zu verarbeiten und daraus Erfahrungen in Form von Informationen, das heißt Daten generieren.

Mit anderen Worten kann das maschinelle Lernsystem konfiguriert sein, bereitgestellte Informationen zu analysieren, zu kategorisieren und/oder zu verarbeiten, derart, dass eine Vorhersage von zukünftigen Werten, das heißt Parametern und/oder Eigenschaften anhand der bereitgestellten analysierten, kategorisierten und/oder verarbeiteten Informationen möglich ist. Derartige Werte können wiederum Informationen darstellen, welche mit einer gewissen Wahrscheinlichkeit eine Vorhersage über das zukünftige Verhalten des Feldgeräts ermöglichen oder zumindest vorschlagen.

Das maschinelle Lernsystem wird durch die Informationen der zumindest einen ersten Informationsquelle trainiert, sodass aufgrund dieser so genannten Trainingsinformationen Zusammenhänge durch den zumindest einen ersten Algorithmus und/oder durch den zumindest einen zweiten Algorithmus erkannt werden können, vorzugsweise mit entsprechender Wahrscheinlichkeit behaftet. In der zumindest einen ersten Informationsquelle sind gemessene Parameter und/oder Eigenschaften des Feldgeräts in einem bestimmten Betriebszustand enthalten (beispielsweise Temperaturwerte, Druckwerte, etc.).

Auf Basis der Informationen der zumindest einen ersten Informationsquelle wird das maschinelle Lernsystem derart trainiert, dass nun unbekannte oder neue Informationen über das Feldgerät oder zu dem Feldgerät bewertet werden können. Diese Bewertung stellt eine Information über das zukünftige Betriebsverhalten des Feldgeräts dar, beispielsweise einen zukünftigen Funktionszustand und/oder einen zukünftigen Verschleißzustand, und wird in der generierten zumindest einen ersten Protokollinformation zu dem Feldgerät enthalten sein.

Das Verfahren zur Analyse eines Feldgeräts ist somit beispielsweise durch eine wesentlich vereinfachte Administration und/oder Konfiguration gekennzeichnet. Wichtige Kriterien zur Ausführung und Arbeitsweise können somit vorzugsweise durch die Generierung der Beschreibungsinformation und/oder der Verarbeitungsinformation im Vorfeld der weiteren Ausführung des Verfahrens, vorzugsweise des zumindest einen ersten Algorithmus und/oder des zumindest einen zweiten Algorithmus, festgelegt werden.

Das Ausführen des zumindest einen ersten Algorithmus und/oder des zumindest einen zweiten Algorithmus umfasst weiter: Verarbeiten der Informationen der zumindest einen ersten Informationsquelle und des zumindest einen ersten Parameters mit Informationen zu dem Feldgerät zumindest einer zweiten Informationsquelle, vorzugsweise in Bezug auf den zumindest einen ersten Parameter, durch den zumindest einen ersten Algorithmus und/oder den zumindest einen zweiten Algorithmus.

Die zumindest eine zweite Informationsquelle enthält wie oben auch anhand der zumindest einen ersten Informationsquelle beschrieben, gemessene Parameter und/oder Eigenschaften zu dem Feldgerät enthalten oder noch zu messende Parameter und/oder Eigenschaften zu dem Feldgerät. Zu messende Informationen, das heißt Parameter und/oder Eigenschaften des Feldgeräts können durch das Verfahren bei dem Feldgerät abgefragt und/oder ausgelesen werden.

Verarbeiten kann ein Kategorisieren der Informationen der zumindest einen ersten Informationsquelle und der Informationen der zumindest einen zweiten Informationsquelle umfassen. Beispielsweise können durch den zumindest einen ersten Algorithmus und/oder durch den zumindest einen zweiten Algorithmus vor dem Hintergrund der verarbeiteten Informationen der zumindest einen ersten Informationsquelle weitere Zusammenhänge zwischen Parametern und/oder Eigenschaften des Feldgeräts erkannt werden.

Es ist möglich, dass das Verfahren umfasst:
Vergleichen der zumindest einen ersten Protokollinformation mit einer Referenzinformation, und Generieren zumindest einer ersten Qualitätsinformation bei Abweichen der zumindest einen ersten Protokollinformation von der Referenzinformation nach zumindest einem Kriterium.

Die Referenzinformation kann beispielsweise Parameter und/oder Eigenschaften des Feldgeräts enthalten, welche ein maximal zulässiges Betriebsverhalten des Feldgeräts für eine bestimmte Lebensdauer darstellen. Das zumindest eine Kriterium kann ein Grenzwert, beispielsweise ein Temperaturgrenzwert, oder ein Grenzwertbereich sein. Die zumindest eine erste Qualitätsinformation kann beispielsweise eine weitere Bewertung über einen zukünftigen Funktionszustand des Feldgeräts enthalten. Es ist möglich, dass die zumindest eine erste Qualitätsinformation auf einer graphischen Benutzeroberfläche der Benutzereingabeeinheit angezeigt wird.

Weiter kann bei dem Verfahren gemäß der vorliegenden Erfindung vorgesehen sein: Anpassen der Beschreibungsinformation und/oder der Verarbeitungsinformation bei Vorliegen zumindest einer ersten Qualitätsinformation anhand der zumindest einen ersten Protokollinformation in Bezug auf die Informationen der zumindest einen zweiten Informationsquelle.

Beispielsweise kann in der Verarbeitungsinformation eine weitere, das heißt zumindest eine dritte Informationsquelle mit Informationen zu dem Feldgerät festgelegt werden. Die zumindest eine dritte Informationsquelle kann beispielswiese Informationen zu dem Feldgerät enthalten, in welchem sich das Feldgerät in einem bestimmten Betriebszustand, beispielsweise in einem kritischen Betriebszustand, befindet.

Das Verfahren gemäß der vorliegenden Erfindung kann umfassen:
Ausführen des zumindest einen ersten Algorithmus und/oder des zumindest einen zweiten Algorithmus anhand oder in Abhängigkeit der angepassten Beschreibungsinformation und/oder anhand oder in Abhängigkeit der angepassten Verarbeitungsinformation; und Generieren zumindest einer zweiten Protokollinformation zu dem Feldgerät durch den zumindest einen ersten Algorithmus und/oder durch den zumindest einen zweiten Algorithmus; und Vergleichen der zumindest einen zweiten Protokollinformation mit der Referenzinformation und Generieren zumindest einer zweiten Qualitätsinformation bei Abweichen der zumindest einen zweiten Protokollinformation von der Referenzinformation nach dem zumindest einen Kriterium.

Gemäß einem weiteren Gesichtspunkt der vorliegenden Erfindung kann Generieren der Beschreibungsinformation umfassen:
Definieren eines Identifikators der Beschreibungsinformation zur Festlegung eines Ausführungsintervalls; und/oder Definieren zumindest eines Parameters für die zumindest eine Funktion zur Verarbeitung durch den zumindest einen ersten Algorithmus und/oder durch den zumindest einen zweiten Algorithmus.

Gemäß einem weiteren Aspekt der vorliegenden Erfindung kann vorgesehen sein, dass die Beschreibungsinformation, vorzugsweise die zumindest eine Funktion, zumindest teilweise zum Steuern des zumindest einen ersten Algorithmus und/oder des zumindest einen zweiten Algorithmus konfiguriert ist und vorzugsweise zumindest zwei Funktionen umfasst, wobei die zumindest eine Funktion der zumindest zwei Funktionen zumindest eines von Folgenden umfasst:
Festlegen einer Kommunikationsverbindung zu dem Feldgerät; Festlegen zumindest einer Informationsquelle mit Informationen zu dem Feldgerät; Festlegen des Abfragens der Informationen der zumindest einen Informationsquelle; Festlegen des Vorverarbeitens der Informationen der zumindest einen Informationsquelle; Festlegen des Anpassens der Informationen der zumindest einen Informationsquelle; Festlegen des Nachverarbeitens der Informationen der zumindest einen Informationsquelle; und/oder Festlegen des Speicherns der Informationen der zumindest einen Informationsquelle. Festlegen kann hierbei, wie bereits oben beschrieben, als Definieren oder Bestimmen verstanden werden.

Gemäß einem weiteren Aspekt der Erfindung kann vorgesehen sein, dass das Verfahren umfasst:
Visualisieren zumindest der generierten zumindest einen ersten Protokollinformation und/oder vorzugsweise einer zumindest zweiten Protokollinformation und/oder vorzugsweise der generierten zumindest einen ersten und/oder zumindest einen zweiten Qualitätsinformation, vorzugsweise auf einer graphischen Benutzeroberfläche der Benutzereingabeeinheit.

Es ist möglich, dass das Verfahren gemäß der vorliegenden Erfindung umfasst: Parametrieren zumindest der Beschreibungsinformation und/oder der Verarbeitungsinformation über die Benutzereingabeeinheit, vorzugsweise über eine graphischen Benutzeroberfläche der Benutzereingabeeinheit. Dadurch kann beispielsweise zumindest die Beschreibungsinformation auf einfache und schnelle Weise geändert, das heißt angepasst und/oder erweitert werden. Beispielsweise können Start- und Stoppzeiten für das Verfahren und/oder auch zumindest ein Abbruchkriterium für ein vorzeitiges Beenden des Verfahrens zur Analyse des Feldgeräts festgelegt werden.

Gemäß einem weiteren Gesichtspunkt der Erfindung kann vorgesehen sein, dass die zumindest eine Schnittstelle als eine REST-Schnittstelle ausgebildet ist und/oder zur Kommunikation nach dem HTTP-Protokoll ausgebildet ist und/oder das Verfahren zumindest teilweise in einem Batchmodus ausgeführt wird mit zumindest einer generierten ersten Beschreibungsinformation und zumindest einer generierten zweiten Beschreibungsinformation, welche zur generierten ersten Beschreibungsinformation zumindest teilweise unterschiedlich ist.

Die Erfindung betrifft nach einem zweiten allgemeinen Gesichtspunkt eine Anordnung mit einem Feldgerät, einer elektronischen Recheneinheit und vorzugsweise einer Benutzereingabeeinheit, wobei die elektronische Recheneinheit konfiguriert ist, das Verfahren, wie hierin offenbart, zumindest teilweise auszuführen.

Zur Vermeidung von Wiederholungen sollen rein auf das Verfahren gerichtete und/oder damit in Zusammenhang offenbarte Merkmale auch als vorrichtungsgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: ein Flussdiagramm eines Beispiels des Verfahrens gemäß der vorliegenden Erfindung;
- Fig. 2: eine schematische Ansicht eines Beispiels einer Anordnung gemäß der vorliegenden Erfindung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

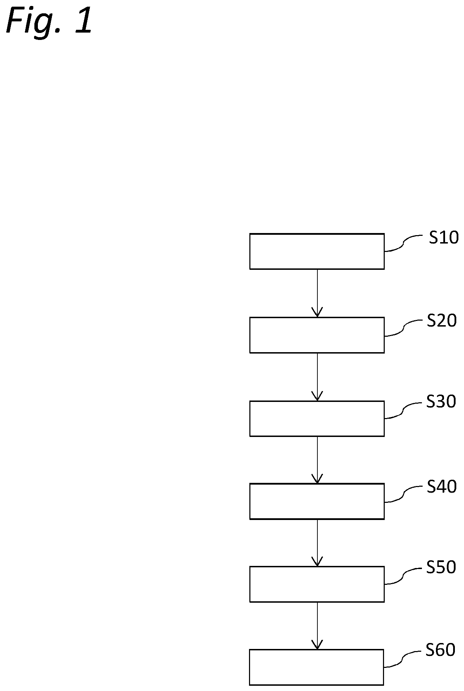

Figur 1 zeigt in schematischer Darstellung einen Ablauf, das heißt ein Flussdiagramm eines Beispiels des Verfahrens gemäß der vorliegenden Erfindung.

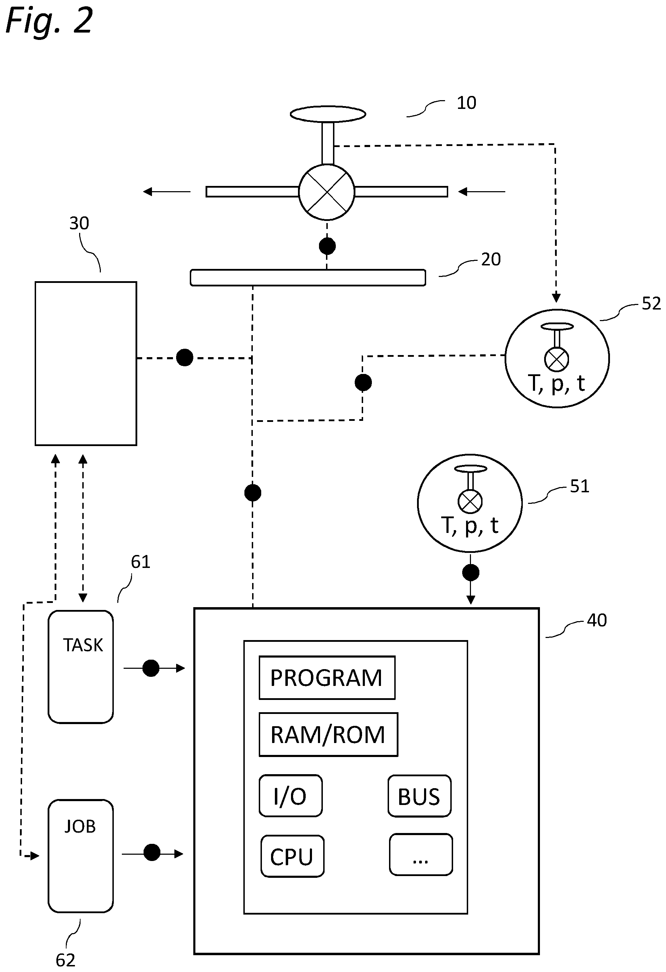

Das Verfahren gemäß der vorliegenden Erfindung dient zum Analysieren, das heißt zur Analyse eines Feldgeräts 10 (siehe hierzu auch Figur 2). Vorzugsweise dient das Verfahren gemäß der vorliegenden Erfindung zur Analyse eines aktuellen Betriebszustands des Feldgeräts 10 hinsichtlich zumindest eines Parameters und/oder zumindest einer Eigenschaft des Feldgeräts 10 und zur Vorhersage eines zukünftigen Betriebszustands des Feldgeräts 10, unter anderem basierend auf dem analysierten aktuellen Betriebszustand des Feldgeräts 10, vorzugsweise mittels oder unter Einbezug einer Benutzereingabeeinheit 30 und einer elektronischen Recheneinheit 40, welche mit dem Feldgerät 10 über zumindest eine Schnittstelle 20 verbunden ist oder verbunden werden kann, um vorzugsweise eine Kommunikationsverbindung zur Übertragung von Signalen auszubilden.

Ein Feldgerät 10 kann als Aktor, vorzugsweise als Stellglied oder als Ventil, ausgebildet sein. Es ist alternativ möglich, dass das Feldgerät 10 als Sensor, vorzugsweise als Messumformer, ausgebildet ist. Ein Feldgerät 10 kann in der Fertigungs- und Prozessindustrie, das heißt im Bereich der Automatisierungstechnik zum Einsatz kommen und über ein Netzwerk und somit Bussystem, beispielsweise Industrial Ethernet, mit weiteren Geräten und Einrichtungen, die an das Netzwerk angebunden sind, verbunden sein.

Zur Übermittlung von Informationen, beispielsweise zur Steuerung und/oder Regelung, ist das Feldgerät 10 vorzugsweise konfiguriert, elektrische Signale zu übertragen und/oder zu empfangen.

Zur näheren Veranschaulichung des beschriebenen Beispiels des Verfahrens gemäß der vorliegenden Erfindung wird das Feldgerät 10 (siehe hierzu Figur 2) beispielhaft als Ventil zur Steuerung und/oder Regulierung eines Prozessmediums, beispielsweise Wasser, in einer Anlage beschrieben.

Das Feldgerät 10 umfasst demnach in Form eines Ventils ein Drosselelement zur Regulierung des Volumenstroms und/oder Drucks des Prozessmediums. Ferner umfasst das Feldgerät zumindest ein elektronisches Bauelement sowie zumindest einen Sensor zur Erfassung von zumindest einem Parameter und/oder von zumindest einer Eigenschaft, welche in Relation zu zumindest einem Parameter steht (in den Figuren nicht näher dargestellt).

Der zumindest eine Parameter kann beispielsweise eine Schaltzeit, das heißt eine Betriebsschaltzeit [t] des Feldgeräts 10, eine Temperatur, das heißt eine Betriebstemperatur [T] des Feldgeräts 10, und/oder einen Druck, das heißt einen Betriebsdruck [p] in dem Feldgerät 10 umfassen. Es ist möglich, dass der zumindest eine Parameter weitere Informationen in Bezug auf das Feldgerät 10 umfasst (beispielsweise Beschleunigungen, etc.). Der zumindest einen Parameter kann beispielsweise ein zu einem bestimmten Zeitpunkt gemessener oder abgefragter Parameter sein.

Das Verfahren gemäß der vorliegenden Erfindung ist vorzugsweise zumindest teilweise ein computerimplementiertes Verfahren und kann auf und/oder mittels einer elektronischen Recheneinheit 40 ausgeführt werden. Die elektronische Recheneinheit 40 kann beispielsweise nach der Von-Neumann-Architektur konfiguriert sein und zumindest ein Rechenwerk (Zentraleinheit, Prozessor), ein Steuerwerk, ein Bussystem, ein Eingabe- /Ausgabewerk und weitere Komponenten und Elemente umfassen. Die elektronische Recheneinheit 40 ist vorzugsweise konfiguriert, Informationen in Form von elektrischen Signalen oder Impulsen zu verarbeiten.

Die elektronische Recheneinheit 40 kann sich in dem Feldgerät 10 befinden, das heißt darin aufgenommen sein, oder mit dem Feldgerät 10 verbunden sein, vorzugsweise über eine Kommunikationsverbindung, das heißt über eine Signalverbindung.

Das nachfolgend beschriebene Beispiel des Verfahrens gemäß der vorliegenden Erfindung dient zum Analysieren des Feldgeräts 10, um einen aktuellen Betriebszustand und/oder um vorzugsweise einen zukünftigen Betriebszustand oder ein zukünftiges Betriebsverhalten und/oder eine zukünftige Funktionsfähigkeit des Feldgeräts 10, insbesondere einen möglicherweise drohenden Ausfall des Feldgeräts 10, ermitteln und/oder vorhersagen zu können.

Hierbei können beispielsweise auch zukünftig zu erwartende Verschleißeigenschaften ermittelt werden. Mit dem Verfahren gemäß der vorliegenden Erfindung kann beispielsweise eine Aussage darüber getroffen werden, ob das Feldgerät 10 bereits eine Verschleißgrenze erreicht hat oder nicht oder zukünftig erreichen wird.

Das Verfahren zum Analysieren des Feldgeräts kann in Abschnitt S10 in Figur 1 beispielsweise über eine Benutzereingabeeinheit 30 (siehe hierzu Figur 2) durch einen Benutzer gestartet werden. Die Benutzereingabeeinheit 30 kann hierzu mit dem zu analysierenden Feldgerät 10 über zumindest eine Schnittstelle 20 verbunden sein. Die zumindest eine Schnittstelle 20 kann zumindest eine Schnittstelle nach der so genannten Representational State Transfer ("REST") -Spezifikation umfassen.

Es ist alternativ möglich, dass das Verfahren in Abschnitt S10 mehr oder weniger automatisiert, gestartet wird. Mit anderen Worten erfolgt hierbei kein Starten des Verfahrens durch einen von einem Benutzer manuell eingegebenen Befehl. Vielmehr kann das Verfahren zum Analysieren des Feldgeräts 10 anhand vorgegebener und/oder vordefinierter Kriterien gestartet werden und beispielsweise durch die elektronische Recheneinheit 40, welche im Rahmen eines Netzwerks über eine Kommunikationsverbindung, beispielsweise über ein Bussystem, mit dem Feldgerät 10 verbunden ist.

In einer ersten Informationsquelle, das heißt Speichereinrichtung 51 kann eine Datenbank enthalten und/oder abgelegt sein, welche Informationen in Form von so genannten Prozessdaten zu dem Feldgerät 10 beinhaltet und diese abrufbar bereithält. Prozessdaten können Informationen umfassen oder betreffen, welche Betriebseigenschaften, das heißt das Betriebsverhalten des Feldgeräts 10 und somit das Feldgerät 10 im Betriebszustand repräsentieren.

Im Falle der Ausbildung des zu analysierenden Feldgerätes 10 als Ventil können beispielsweise in der Datenbank in der ersten Speichereinrichtung 51 Informationen zu Betriebstemperaturen in Grad Celsius, zu Betriebsdrücken in Bar und zu Betriebsschaltzeiten des Ventils in Sekunden enthalten und/oder abgelegt sein. Die Betriebsschaltzeiten des Ventils 10 können hierbei von Betriebstemperaturen und/oder Betriebsdrücken des Ventils 10 abhängig sein. Derartige Informationen stellen vorzugsweise Parameter und besonders bevorzugt Betriebsparameter oder Eigenschaften des Ventils 10 dar, durch welche das Betriebsverhalten des Ventils 10 in einem vorgesehenen Betriebszustand gekennzeichnet ist. Es ist möglich, dass die erste Speichereinrichtung 51 als erste Informationsquelle weitere Informationen zum Ventil 10 in Form von Prozessdaten enthält.

Nachdem das Verfahren in Abschnitt S10 gestartet wurde, erfolgt in Abschnitt S20 vorzugsweise ein Generieren einer Beschreibungsinformation 61. Die Beschreibungsinformation 61 umfasst oder beinhaltet wiederum zumindest eine Funktion auf Basis einer Vorlageninformation (in den Figuren nicht dargestellt).

Die Vorlageninformation kann beispielsweise eine vordefinierte Anzahl konfigurierbarer Analysefunktionen zur Analyse des Feldgeräts 10 in einem jeweiligen Umfang beinhalten. Beispielsweise kann die Vorlageninformation auch Angaben darüber enthalten oder Funktionen bereitstellen, welche Parameter und/oder Eigenschaften des Feldgeräts 10 und in welcher Weise diese analysiert werden sollen und/oder vorzugsweise in welchem Umfang. Somit kann in der Vorlageninformation eine Funktion oder eine Funktionsangabe abgelegt sein, welche beispielsweise das Verfahren zur Analyse des Feldgeräts 10 zur Ermittlung eines zukünftigen Verschleißzustands betrifft. Ein Parameter kann beispielsweise eine Betriebstemperatur des Ventils 10 umfassen.

Es ist zusätzlich möglich, dass die Vorlageninformation eine Vorgabe oder eine Vorschrift für eine Normierung und/oder Umstrukturierung von zumindest einem zu ermittelnden Parameter und/oder von zumindest einer zu ermittelnden Eigenschaft des Ventils 10 umfasst und sich somit daraus eine Funktion zur Verarbeitung des zumindest einen Parameters und/oder der zumindest einen Eigenschaft ableiten lässt.

Zusätzlich oder alternativ ist es möglich, dass die Vorlageninformation eine Vorgabe oder eine Vorschrift für eine Normierung und/oder Umstrukturierung von Analyseergebnissen enthält.

Zusätzlich oder alternativ kann die Vorlageninformation weitere Angaben in Form von Vorgaben oder Vorschriften enthalten, um eine Funktion für die Beschreibungsinformation zu bilden. Somit kann die Vorlageninformation die Auswahl und/oder Festlegung eines Analyseverfahrens in einem maschinellem Lernsystem, welches im Zuge des Analysierens des Feldgeräts 10 zum Einsatz kommt, umfassen.

Das maschinelle Lernsystem kann als eine Anwendung der künstlichen Intelligenz konfiguriert sein, auf der elektronischen Recheneinheit 40 ausgeführt zu werden und zumindest einen ersten Algorithmus und/oder zumindest einen zweiten Algorithmus umfassen.

Das maschinelle Lernsystem greift auf die Informationen der ersten Informationsquelle, das heißt die Datenbank in der ersten Speichereinrichtung 51 zu.

Die in der Datenbank der ersten Speichereinrichtung 51 enthaltenen Informationen enthalten Trainingsdaten zu dem Feldgerät 10 für das maschinelle Lernsystems. Mit anderen Worten representieren diese Informationen ein Betriebsverhalten des Feldgeräts 10 welches das Feldgerät 10 in einem Normalbetrieb darstellt.

Das maschinelle Lernsystem, das heißt zumindest ein erster Algorithmus und/oder zumindest ein zweiter Algorithmus des maschinellen Lernsystems kann beispielsweise ein Regressions-Algorithmus mit entsprechenden Verarbeitungsvorschriften sein. Das maschinelle Lernsystem kann in einer solchen Konfiguration anhand oder in Abhängigkeit von Prozessdaten des Feldgeräts 10, welche in der Datenbank in der ersten Speichereinrichtung 51 enthalten und/oder abgelegt sind, eine Vorhersage zum zukünftigen Betriebszustand des Ventils 10 ermitteln.

Hierbei kann beispielsweise zumindest eines von folgenden Regressionsverfahren zum Einsatz kommen, welches durch den zumindest einen ersten Algorithmus und/oder durch den zumindest einen zweiten Algorithmus realisiert wird: Gewöhnliche oder Ordentliche Regression der kleinsten Quadrate (OLSR), Lineare Regression, Logistische Regression, Schrittweise Regression, Multivariate adaptive Regressionssplines (MARS) und/oder Lokal geschätzte Streudiagramm-Glättung (LOESS).

Alternativ oder zusätzlich ist es möglich, dass das maschinelle Lernsystem, das heißt der zumindest eine erste Algorithmus und/oder der zumindest eine zweite Algorithmus als speicherbasierter oder als instanzbasierter Algorithmus ausgebildet ist und/oder ausgeführt wird.

Die Vorlageninformation kann zusätzlich oder alternativ eine Angabe zu zumindest einer Schnittstelle umfassen, über welche Analyseergebnisse des Verfahrens in einer Speichereinrichtung, das heißt in einer Datenbank abgelegt werden sollen (in Figur 2 nicht dargestellt).

Die Beschreibungsinformation 61 ist vorzugsweise konfiguriert, den zumindest einen ersten Algorithmus des maschinellen Lernsystems und/oder den zumindest einen zweiten Algorithmus des maschinellen Lernsystems auszuwählen und/oder aufzurufen; und/oder durch den zumindest einen ersten Algorithmus des maschinellen Lernsystems und/oder durch den zumindest einen zweiten Algorithmus des maschinellen Lernsystems verarbeitet zu werden. Das maschinelle Lernsystem kann wie hierin offenbart konfiguriert sein.

Ein Generieren der Beschreibungsinformation umfasst vorzugsweise im Wesentlichen eine Auswahl und/oder Festlegung von Kommunikationsverbindungen für Informationen, Algorithmen des maschinellen Lernsystems mit dem zumindest einem ersten Algorithmus und/oder dem zumindest einem zweiten Algorithmus, Normierungsverfahren und/oder Umstrukturierungsverfahren.

Die in der Beschreibungsinformation enthaltenen Funktionen können auch als "Tasks" und somit als Aufgabenspezifikation für das Verfahren zum Analysieren des Feldgeräts 10 bezeichnet werden. Ein Task spezifiziert demnach vorzugsweise die Hauptaufgabe des Verfahrens gemäß der vorliegenden Erfindung und betrifft somit das Analysieren des Feldgeräts 10, vorzugsweise die Ermittlung eines zukünftigen Betriebszustands des Ventils.

Das Generieren der Beschreibungsinformation umfasst die Erstellung einer Datei mit der generierten Beschreibungsinformation in welcher die entsprechenden Angaben enthalten sind. Die Datei kann beispielsweise direkt von einem Benutzer über eine Benutzereingabeeinheit 30 erstellt und/oder editiert werden, um somit das Verfahren zu konfigurieren. Alternativ ist es möglich, dass die Beschreibungsinformation als Datei mit Hilfe eines Softwareprogramms, welches beispielsweise auf der elektronischen Recheneinheit 10 ausgeführt wird, mehr oder weniger automatisiert erzeugt wird. Ein Benutzer kann vorzugsweise allerdings über die Benutzereingabeeinheit 30 mit dem Softwareprogramm interagieren.

Die Beschreibungsdatei 61 kann ferner eine Angabe enthalten, welche Informationen aus einer zweiten Informationsquelle, welche in einer zweiten Speichereinrichtung 52 abgelegt sind, zur Analyse mit den Informationen der ersten Informationsquelle in der ersten Speichereinrichtung 51 verarbeitet werden. Die Informationen der zweiten Informationsquelle können gemessene oder zu messende Parameter und/oder Eigenschaften des Ventils 10 enthalten oder darstellen.

Nachdem nun mit dem Generieren der Beschreibungsinformation festgelegt wurde, welche Parameter und/oder Eigenschaften des Feldgeräts im Zuge der Analyse des Feldgeräts 10 ermittelt werden sollen, kann nun in einem Abschnitt S30 ein Generieren einer Verarbeitungsinformation 62 stattfinden.

Die Verarbeitungsinformation 62 basiert auf der Beschreibungsinformation 61 und/oder ist von der Beschreibungsinformation 61 abhängig.

In der Verarbeitungsinformation 62 werden nun - in Analogie zur Beschreibungsinformation 61 - im Zuge der weiteren Analyse des Ventils 10 weitere Kriterien für die Ausführung des Verfahrens gemäß der vorliegenden Erfindung festgelegt.

Beispielsweise kann in der Verarbeitungsinformation 62 ein so genannter "Job" festgelegt werden, das Feldgerät, das heißt das Ventil 10 beispielsweise kurzfristig zu überwachen, beispielsweise im Hinblick auf festgelegte Parameter und/oder Eigenschaften des Ventils 10 wie Temperatur, Druck und Schaltzeit.

In Abschnitt S40 findet die Auswahl des zumindest einen ersten und/oder des zumindest einen zweiten Algorithmus des maschinellen Lernsystems statt. Dies erfolgt anhand oder in Abhängigkeit der Beschreibungsinformation und der Verarbeitungsinformation mit den darin enthaltenen jeweiligen Angaben.

Der ausgewählte und aufgerufene zumindest eine erste Algorithmus und/oder zumindest eine zweite Algorithmus analysiert, kategorisiert und verarbeitet nun die Informationen der ersten Informationsquelle aus der ersten Speichereinrichtung 51 mit den Informationen der zweiten Informationsquelle aus der zweiten Speichereinrichtung 52.

Die Informationen der ersten Informationsquelle aus der ersten Speichereinrichtung 51 stellen hierbei, wie bereits oben erwähnt, so genannte Trainingsdaten für das maschinelle Lernsystem in Bezug auf das Ventil 10 dar. Die Informationen der zweiten Informationsquelle aus der zweiten Speichereinrichtung 52 stellen aktuelle Daten, das heißt Parameter und/oder Eigenschaften in Bezug auf das Ventil 10 dar. Durch Verarbeiten mittels des zumindest einen ersten Algorithmus und/oder mittels des zumindest einen zweiten Algorithmus ein mit einer gewissen Wahrscheinlichkeit zukünftig zu erwartendes Betriebsverhalten des Ventils 10 ermittelt.

Das zukünftig zu erwartende Betriebsverhalten des Ventils 10 wird durch Generieren zumindest einer ersten Protokollinformation zu dem Ventil 10 festgehalten. Die zumindest eine ersten Protokollinformation kann vorzugsweise als Datei in einer Speichereinrichtung abgespeichert werden.

Die zumindest eine erste Protokollinformation enthält einen zu erwartenden Verlauf von Schaltzeiten des Ventils 10 bei gegeben Betriebstemperaturen und/oder Betriebsdrücken.

Der Verlauf der Schaltzeiten des Ventils 10 ist hierbei ein berechneter und/oder prognostizierter Verlauf anhand der verarbeiteten Informationen der ersten und der zweiten Informationsquelle durch den zumindest einen ersten Algorithmus und/oder durch den zumindest einen zweiten Algorithmus.

Die zumindest eine erste Protokollinformation kann anschließend in einem Abschnitt S50 weiterverarbeitet werden, in dem die darin enthaltenen Angaben, welche in Relation zu den Parametern und/oder Eigenschaften des Ventils 10 stehen, beispielsweise mit einer Referenzinformation verglichen werden. Die Referenzinformation kann beispielsweise Parameter und/oder Eigenschaften des Ventils 10 enthalten, welche ein maximal zulässiges Betriebsverhalten des Ventils 10 für eine bestimmte Lebensdauer darstellen. Im Falle eines Abweichens der zumindest einen ersten Protokollinformation von der Referenzinformation nach zumindest einem Kriterium kann zumindest eine erste Qualitätsinformation generiert werden. Das zumindest eine Kriterium kann ein Grenzwert, beispielsweise ein Temperaturgrenzwert, oder ein Grenzwertbereich sein. Die zumindest eine erste Qualitätsinformation kann beispielsweise eine weitere Bewertung über einen zukünftigen Funktionszustand des Ventils 10 enthalten.

Schließlich kann die zumindest eine erste Protokollinformation und/oder die zumindest eine erste Qualitätsinformation in einem Abschnitt S60 auf einer graphischen Benutzeroberfläche der Benutzereingabeeinheit 40 angezeigt werden, um einem Benutzer eine Rückmeldung der Analyse des Ventils 10 zu geben.

Je nach Ergebnis, das heißt den Angaben in der zumindest einen ersten Protokollinformation und/oder in der zumindest einen ersten Qualitätsinformation können weitere Abschnitte und/oder Abläufe des Verfahrens gemäß der vorliegenden Erfindung, wie hierin offenbart, erfolgen.

Figur 2 zeigt eine schematische Ansicht eines Beispiels einer Anordnung gemäß der vorliegenden Erfindung mit dem zu analysierenden Feldgerät, das heißt dem Ventil 10, der Schnittstelle 20, der Benutzereingabeeinheit 30, der elektronischen Recheneinheit 40 zur zumindest teilweisen Ausführung des Verfahrens gemäß der vorliegenden Erfindung, der ersten und zweiten Speichereinrichtung 51 und 52 mit den Informationen zu dem Ventil 10 sowie der Beschreibungsinformation 61 und der Verarbeitungsinformation 62, mittels welchen das Verfahren gemäß der vorliegenden Erfindung wie oben beschrieben administriert, vorzugsweise zumindest teilweise gesteuert, werden kann.

### Bezugszeichenliste

- 10: Feldgerät
- 20: Schnittstelle
- 30: Benutzereingabeeinheit
- 40: elektronische Recheneinheit
- 51: erste Informationsquelle/erste Speichereinrichtung
- 52: zweite Informationsquelle/zweite Speichereinrichtung
- 61: Beschreibungsinformation
- 62: Verarbeitungsinformation

## Patentansprüche

1. Verfahren zur Analyse eines Feldgeräts vorzugsweise mittels einer Benutzereingabeeinheit (30), welche mit dem Feldgerät (10) über zumindest eine Schnittstelle (20) verbunden ist, wobei das Feldgerät (10) als Ventil (10) zur Steuerung und/oder Regulierung eines Prozessmediums in einer Anlage ausgeführt ist, umfassend:
• Generieren einer Beschreibungsinformation (61), welche zumindest eine Funktion auf Basis einer Vorlageninformation umfasst, wobei die Vorlageinformation eine vordefinierte Anzahl konfigurierbarer Analysefunktionen zur Analyse des Feldgerätes beinhalten,
wobei die Beschreibungsinformation (61) konfiguriert ist, zumindest einen ersten Algorithmus eines maschinellen Lernsystems und/oder zumindest einen zweiten Algorithmus eines maschinellen Lernsystems aufzurufen; und/oder wobei die Beschreibungsinformation (61) konfiguriert ist, durch zumindest einen ersten Algorithmus eines maschinellen Lernsystems und/oder durch zumindest einen zweiten Algorithmus eines maschinellen Lernsystems verarbeitet zu werden, wobei das Generieren der Beschreibungsinformation (61) die Erstellung einer Datei mit der generierten Beschreibungsinformation (61) umfasst, wobei die Erstellung der Datei direkt von einem Benutzer über eine Benutzereingabeeinheit (30) erstellt und/oder editiert wird, um somit das Verfahren zu konfigurieren,
• Generieren einer Verarbeitungsinformation (62) anhand der Beschreibungsinformation (61), zur Festlegung zumindest einer ersten Informationsquelle (51) mit Informationen zu dem Feldgerät (10) und zumindest eines ersten Parameters zu dem Feldgerät (10) zur Verarbeitung durch den zumindest einen ersten Algorithmus und/oder durch den zumindest einen zweiten Algorithmus, wobei die Informationen zu dem Feldgerät (10) Trainingsdaten für das maschinelle Lernsystem in Bezug auf das Ventil (10) darstellen, und wobei der zumindest ein erster Parameter zu dem Feldgerät (10) eine messbare Eigenschaft und/oder zumindest eine berechenbare Eigenschaft des Feldgeräts (10) oder physikalische Größe betreffend das Feldgerät (10) in einem bestimmten Betriebszustand umfasst, umfassend zumindest eine Angabe von Betriebstemperatur, Betriebsdruck, Betriebsschaltzeit, oder Beschleunigungsverhalten;
• Ausführen des zumindest einen ersten Algorithmus des maschinellen Lernsystems und/oder des zumindest einen zweiten Algorithmus des maschinellen Lernsystems anhand der Beschreibungsinformation (61) und der Verarbeitungsinformation (62), wobei Ausführen umfasst:
Verarbeiten der Informationen der zumindest einen ersten Informationsquelle (51) und des zumindest einen ersten Parameters mit Informationen zu dem Feldgerät (10) zumindest einer zweiten Informationsquelle (52) durch den zumindest einen ersten Algorithmus und/oder den zumindest einen zweiten Algorithmus,
wobei die Informationen der zumindest einen ersten Informationsquelle (51) und des zumindest einen ersten Parameters Trainingsdaten umfassen, die ein Betriebsverhalten des Feldgeräts (10) repräsentieren, welches das Feldgerät (10) in einem Normalbetrieb darstellt, wobei die zumindest eine erste Informationsquelle (51) in einer ersten Speichereinrichtung abgelegt ist, und
wobei die Informationen zu dem Feldgerät (10) der zumindest einen zweiten Informationsquelle (52) gemessene oder zu messende Parameter und/oder Eigenschaften des Feldgeräts (10) enthalten oder darstellen, wobei der gemessene oder zu messende Parameter zumindest eine Angabe von Betriebstemperatur, Betriebsdruck, Betriebsschaltzeit, oder Beschleunigungsverhalten umfasst; wobei die zumindest eine zweite Informationsquelle (52) in einer zweiten Speichereinrichtung abgelegt ist;
• Generieren zumindest einer ersten Protokollinformation zu dem Feldgerät (10) durch Aufrufen des zumindest einen ersten Algorithmus und/oder des zumindest einen zweiten Algorithmus anhand der verarbeiteten Informationen der festgelegten ersten Informationsquelle (51) und/oder des festgelegten ersten Parameters, wobei die Protokollinformation einen zu erwartenden Verlauf von Schaltzeiten des Ventils (10) bei gegebenen Betriebstemperaturen und/oder Betriebsdrücken umfasst, und
wobei der Verlauf der Schaltzeiten des Ventils 10 ein berechneter und/oder prognostizierter Verlauf anhand der verarbeiteten Informationen der ersten und der zweiten Informationsquelle (51, 52) durch den zumindest einen ersten Algorithmus und/oder durch den zumindest einen zweiten Algorithmus ist.

2. Verfahren nach Anspruch 1, umfassend:
• Vergleichen der zumindest einen ersten Protokollinformation mit einer Referenzinformation, und
• Generieren zumindest einer ersten Qualitätsinformation bei Abweichen der zumindest einen ersten Protokollinformation von der Referenzinformation nach zumindest einem Kriterium.

3. Verfahren nach Anspruch 2, weiter umfassend:
• Anpassen der Beschreibungsinformation (61) und/oder der Verarbeitungsinformation (62) bei Vorliegen zumindest einer ersten Qualitätsinformation anhand der zumindest einen ersten Protokollinformation in Bezug auf die Informationen der zumindest einen zweiten Informationsquelle (52).

4. Verfahren nach einem der vorhergehenden Ansprüche, wobei Generieren der Beschreibungsinformation (61) umfasst:
• Definieren eines Identifikators der Beschreibungsinformation (61) zur Festlegung eines Ausführungsintervalls

5. Verfahren nach einem der vorhergehenden Ansprüche,
wobei die Beschreibungsinformation (61), vorzugsweise die zumindest eine Funktion, zumindest teilweise zum Steuern des zumindest einen ersten Algorithmus und/oder des zumindest einen zweiten Algorithmus konfiguriert ist und vorzugsweise zumindest zwei Funktionen umfasst, wobei die zumindest eine Funktion der zumindest zwei Funktionen zumindest eines von Folgenden umfasst:
• Festlegen einer Kommunikationsverbindung zu dem Feldgerät (10);
• Festlegen zumindest einer Informationsquelle (51, 52) mit Informationen zu dem Feldgerät (10);
• Festlegen des Abfragens der Informationen der zumindest einen Informationsquelle (51, 52);
• Festlegen des Vorverarbeitens der Informationen der zumindest einen Informationsquelle (51, 52);
• Festlegen des Anpassens der Informationen der zumindest einen Informationsquelle (51, 52);
• Festlegen des Nachverarbeitens der Informationen der zumindest einen Informationsquelle (51, 52); und/oder
• Festlegen des Speicherns der Informationen der zumindest einen Informationsquelle (51, 52).

6. Verfahren nach einem der vorhergehenden Ansprüche, umfassend:
• Visualisieren zumindest der generierten zumindest einen ersten Protokollinformation und/oder vorzugsweise einer zumindest zweiten Protokollinformation und/oder vorzugsweise der generierten zumindest einen ersten und/oder zumindest einen zweiten Qualitätsinformation, vorzugsweise auf einer graphischen Benutzeroberfläche der Benutzereingabeeinheit (30).

7. Verfahren nach einem der vorhergehenden Ansprüche, umfassend:
• Parametrieren der Beschreibungsinformation (61) über die Benutzereingabeeinheit (30).

8. Verfahren nach einem der vorhergehenden Ansprüche,
wobei die zumindest eine Schnittstelle (20) als eine REST-Schnittstelle ausgebildet ist und/oder zur Kommunikation nach dem HTTP-Protokoll ausgebildet ist und/oder wobei das Verfahren zumindest teilweise in einem Batchmodus ausgeführt wird mit zumindest einer generierten ersten Beschreibungsinformation (61) und zumindest einer generierten zweiten Beschreibungsinformation (61), welche zur generierten ersten Beschreibungsinformation (61) zumindest teilweise unterschiedlich ist.

9. Anordnung mit einem Feldgerät (10), einer elektronischen Recheneinheit (40) und einer Benutzereingabeeinheit (30), wobei die elektronische Recheneinheit (40) konfiguriert ist, das Verfahren gemäß einem der vorhergehenden Ansprüche auszuführen.

## Claims

1. Method for the analysis of a field device, preferably by means of a user input unit (30) which is connected to the field device (10) via at least one interface (20), wherein the field device (10) is embodied as a valve (10) for the control and/or regulation of a process medium in a plant, comprising:
• Generating a description information (61) which comprises at least one function on the basis of a template information, wherein the template information contains a predefined number of configurable analysis functions for the analysis of the field device,
wherein the description information (61) is configured to call at least one first algorithm of a machine learning system and/or at least one second algorithm of a machine learning system; and/or
wherein the description information (61) is configured to be processed by at least one first algorithm of a machine learning system and/or by at least one second algorithm of a machine learning system, wherein generating the description information (61) comprises the creation of a file with the generated description information (61), wherein the creation of the file is created and/or edited directly by a user via a user input unit (30), so as to thereby configure the method,
• Generating a processing information (62) on the basis of the description information (61), for the specification of at least one first information source (51) with information about the field device (10) and at least one first parameter of the field device (10) for processing by the at least one first algorithm and/or by the at least one second algorithm, wherein the information about the field device (10) represents training data for the machine learning system with respect to the valve (10), and wherein the at least one first parameter of the field device (10) comprises a measurable property and/or at least one computable property of the field device (10) or physical quantity relating to the field device (10) in a particular operating state, comprising at least one indication of operating temperature, operating pressure, operating switching time, or acceleration behaviour;
• Executing the at least one first algorithm of the machine learning system and/or the at least one second algorithm of the machine learning system on the basis of the description information (61) and the processing information (62), wherein executing comprises:
Processing the information of the at least one first information source (51) and of the at least one first parameter with information of the field device (10) of at least one second information source (52) by the at least one first algorithm and/or the at least one second algorithm,
wherein the information of the at least one first information source (51) and of the at least one first parameter comprises training data which represent an operating behaviour of the field device (10) which represents the field device (10) in a normal operation, wherein the at least one first information source (51) is stored in a first storage device, and
wherein the information about the field device (10) of the at least one second information source (52) contains or represents measured or to-be-measured parameters and/or properties of the field device (10), wherein the measured or to-be-measured parameters comprise at least one indication of operating temperature, operating pressure, operating switching time, or acceleration behaviour; wherein the at least one second information source (52) is stored in a second storage device;
• Generating at least one first log information about the field device (10) by calling the at least one first algorithm and/or the at least one second algorithm on the basis of the processed information of the specified first information source (51) and/or of the specified first parameter, wherein the log information comprises an expected progression of switching times of the valve (10) at given operating temperatures and/or operating pressures, and
wherein the progression of the switching times of the valve (10) is a calculated and/or predicted progression on the basis of the processed information of the first and the second information source (51, 52) by the at least one first algorithm and/or by the at least one second algorithm.

2. Method according to claim 1, comprising:
• Comparing the at least one first log information with a reference information, and
• Generating at least one first quality information upon deviation of the at least one first log information from the reference information according to at least one criterion.

3. Method according to claim 2, further comprising:
• Adapting the description information (61) and/or the processing information (62) upon the presence of at least one first quality information on the basis of the at least one first log information with respect to the information of the at least one second information source (52).

4. Method according to any one of the preceding claims, wherein generating the description information (61) comprises:
• Defining an identifier of the description information (61) for specifying an execution interval.

5. Method according to any one of the preceding claims,
wherein the description information (61), preferably the at least one function, is configured at least partially to control the at least one first algorithm and/or the at least one second algorithm and preferably comprises at least two functions, wherein the at least one function of the at least two functions comprises at least one of the following:
• Specifying a communication link to the field device (10);
• Specifying at least one information source (51, 52) with information about the field device (10);
• Specifying the querying of the information of the at least one information source (51, 52);
• Specifying the pre-processing of the information of the at least one information source (51, 52);
• Specifying the adapting of the information of the at least one information source (51, 52);
• Specifying the post-processing of the information of the at least one information source (51, 52); and/or
• Specifying the storing of the information of the at least one information source (51, 52).

6. Method according to any one of the preceding claims, comprising:
• Visualising at least the generated at least one first log information and/or preferably at least one second log information and/or preferably the generated at least one first and/or at least one second quality information, preferably on a graphical user interface of the user input unit (30).

7. Method according to any one of the preceding claims, comprising:
• Parameterising the description information (61) via the user input unit (30).

8. Method according to any one of the preceding claims,
wherein the at least one interface (20) is embodied as a REST interface and/or is embodied for communication according to the HTTP protocol and/or wherein the method is at least partially executed in a batch mode with at least one generated first description information (61) and at least one generated second description information (61) which is at least partially different from the generated first description information (61).

9. Arrangement with a field device (10), an electronic computing unit (40) and a user input unit (30), wherein the electronic computing unit (40) is configured to execute the method according to any one of the preceding claims.

## Revendications

1. Procédé d'analyse d'un appareil de terrain, de préférence au moyen d'une unité de saisie utilisateur (30) qui est reliée à l'appareil de terrain (10) par au moins une interface (20), dans lequel l'appareil de terrain (10) est réalisé sous forme de vanne (10) pour la commande et/ou la régulation d'un milieu de traitement dans une installation, comprenant :
• Générer une information de description (61) qui comprend au moins une fonction sur la base d'une information de modèle, dans lequel l'information de modèle contient un nombre prédéfini de fonctions d'analyse configurables pour l'analyse de l'appareil de terrain, dans lequel l'information de description (61) est configurée pour appeler au moins un premier algorithme d'un système d'apprentissage automatique et/ou au moins un second algorithme d'un système d'apprentissage automatique ; et/ou dans lequel l'information de description (61) est configurée pour être traitée par au moins un premier algorithme d'un système d'apprentissage automatique et/ou par au moins un second algorithme d'un système d'apprentissage automatique, dans lequel générer l'information de description (61) comprend la création d'un fichier avec l'information de description générée (61), dans lequel la création du fichier est créée et/ou éditée directement par un utilisateur via une unité de saisie utilisateur (30), afin de configurer ainsi le procédé,
• Générer une information de traitement (62) sur la base de l'information de description (61), pour la spécification d'au moins une première source d'informations (51) contenant des informations sur l'appareil de terrain (10) et d'au moins un premier paramètre de l'appareil de terrain (10) pour traitement par ledit au moins un premier algorithme et/ou par ledit au moins un second algorithme, dans lequel les informations sur l'appareil de terrain (10) représentent des données d'entraînement pour le système d'apprentissage automatique par rapport à la vanne (10), et dans lequel ledit au moins un premier paramètre de l'appareil de terrain (10) comprend une propriété mesurable et/ou au moins une propriété calculable de l'appareil de terrain (10) ou une grandeur physique relative à l'appareil de terrain (10) dans un état de fonctionnement particulier, comprenant au moins une indication de température de fonctionnement, de pression de fonctionnement, de temps de commutation de fonctionnement, ou de comportement d'accélération ;
• Exécuter ledit au moins un premier algorithme du système d'apprentissage automatique et/ou ledit au moins un second algorithme du système d'apprentissage automatique sur la base de l'information de description (61) et de l'information de traitement (62), dans lequel exécuter comprend : Traiter les informations de ladite au moins une première source d'informations (51) et dudit au moins un premier paramètre avec des informations sur l'appareil de terrain (10) d'au moins une seconde source d'informations (52) par ledit au moins un premier algorithme et/ou ledit au moins un second algorithme, dans lequel les informations de ladite au moins une première source d'informations (51) et dudit au moins un premier paramètre comprennent des données d'entraînement qui représentent un comportement de fonctionnement de l'appareil de terrain (10) qui représente l'appareil de terrain (10) en fonctionnement normal, dans lequel ladite au moins une première source d'informations (51) est stockée dans un premier dispositif de stockage, et dans lequel les informations sur l'appareil de terrain (10) de ladite au moins une seconde source d'informations (52) contiennent ou représentent des paramètres mesurés ou à mesurer et/ou des propriétés de l'appareil de terrain (10), dans lequel les paramètres mesurés ou à mesurer comprennent au moins une indication de température de fonctionnement, de pression de fonctionnement, de temps de commutation de fonctionnement, ou de comportement d'accélération ; dans lequel ladite au moins une seconde source d'informations (52) est stockée dans un second dispositif de stockage;
• Générer au moins une première information de journal relative à l'appareil de terrain (10) en appelant ledit au moins un premier algorithme et/ou ledit au moins un second algorithme sur la base des informations traitées de la première source d'informations spécifiée (51) et/ou du premier paramètre spécifié, dans lequel l'information de journal comprend une évolution attendue des temps de commutation de la vanne (10) à des températures de fonctionnement et/ou des pressions de fonctionnement données, et dans lequel l'évolution des temps de commutation de la vanne (10) est une évolution calculée et/ou prédite sur la base des informations traitées de la première et de la seconde source d'informations (51, 52) par ledit au moins un premier algorithme et/ou par ledit au moins un second algorithme.

2. Procédé selon la revendication 1, comprenant :
• Comparer ladite au moins une première information de journal avec une information de référence, et
• Générer au moins une première information de qualité en cas d'écart de ladite au moins une première information de journal par rapport à l'information de référence selon au moins un critère.

3. Procédé selon la revendication 2, comprenant en outre :
• Adapter l'information de description (61) et/ou l'information de traitement (62) en présence d'au moins une première information de qualité sur la base de ladite au moins une première information de journal par rapport aux informations de ladite au moins une seconde source d'informations (52).

4. Procédé selon l'une quelconque des revendications précédentes, dans lequel générer l'information de description (61) comprend :
• Définir un identifiant de l'information de description (61) pour spécifier un intervalle d'exécution.

5. Procédé selon l'une quelconque des revendications précédentes, dans lequel l'information de description (61), de préférence ladite au moins une fonction, est configurée au moins partiellement pour commander ledit au moins un premier algorithme et/ou ledit au moins un second algorithme et comprend de préférence au moins deux fonctions, dans lequel ladite au moins une fonction des au moins deux fonctions comprend au moins l'un des éléments suivants :
• Spécifier une liaison de communication vers l'appareil de terrain (10) ;
• Spécifier au moins une source d'informations (51, 52) contenant des informations sur l'appareil de terrain (10) ;
• Spécifier l'interrogation des informations de ladite au moins une source d'informations (51, 52) ;
• Spécifier le prétraitement des informations de ladite au moins une source d'informations (51, 52) ;
• Spécifier l'adaptation des informations de ladite au moins une source d'informations (51, 52) ;
• Spécifier le post-traitement des informations de ladite au moins une source d'informations (51, 52) ; et/ou
• Spécifier le stockage des informations de ladite au moins une source d'informations (51, 52).

6. Procédé selon l'une quelconque des revendications précédentes, comprenant :
• Visualiser au moins la ou les premières informations de journal générées et/ou de préférence au moins une seconde information de journal et/ou de préférence la ou les premières et/ou au moins une seconde information de qualité générées, de préférence sur une interface utilisateur graphique de l'unité de saisie utilisateur (30).

7. Procédé selon l'une quelconque des revendications précédentes, comprenant :
• Paramétrer l'information de description (61) via l'unité de saisie utilisateur (30).

8. Procédé selon l'une quelconque des revendications précédentes, dans lequel ladite au moins une interface (20) est réalisée sous forme d'interface REST et/ou est réalisée pour la communication selon le protocole HTTP et/ou dans lequel le procédé est au moins partiellement exécuté en mode de traitement par lots avec au moins une première information de description générée (61) et au moins une seconde information de description générée (61) qui est au moins partiellement différente de la première information de description générée (61).

9. Arrangement comprenant un appareil de terrain (10), une unité de calcul électronique (40) et une unité de saisie utilisateur (30), dans lequel l'unité de calcul électronique (40) est configurée pour exécuter le procédé selon l'une quelconque des revendications précédentes.
